# EUROPÄISCHE PATENTANMELDUNG

(11) **EP 1 714 556 A2**
(43) Veröffentlichungstag der Anmeldung: **25.10.2006**
(21) Anmeldenummer: 06006682.6
(22) Anmeldetag: 30.03.2006
(51) Int. Cl.: A21C 1/02, A21C 1/14, A21C 1/10, B01F 7/16

(54) **Misch-und Knetanordnung**

(30) Priorität: 23.04.2005 DE 102005019082
(71) Anmelder: Neuenkirchener Maschinenfabrik Emil Kemper GmbH, 33397 Rietberg (DE)
(72) Erfinder: Peitzmeier, Ulrich, 33415 Vert (DE); Baak, Meinolf, 33397 Rietberg (DE)
(74) Vertreter: Hofmann, Matthias

(57) **Zusammenfassung**

Eine Misch- und Knetanordnung (1) hat einen Knetbottich (2) und mindestens ein Knetwerkzeug (3, 4). Eine Sprüheinrichtung (14) der Anordnung (1) hat mindestens eine Sprühdüse (10) zur Erzeugung eines Sprühnebels im Knetbottich (2). Ferner hat die Sprüheinrichtung (14) eine Zuführeinrichtung (31) zum Zuführen von flüssigen oder verflüssigten Teigkomponenten zu der Sprühdüse (10). Die Sprüheinrichtung (14) hat weiterhin eine Quelle (26, 29) für ein sauerstoffhaltiges Gas und eine Druckeinheit (27, 30), die das sauerstoffhaltige Gas unter Druck setzt. In einem Sprühkopf der Sprühdüse (10) werden die flüssigen oder verflüssigten Teigkomponenten mit dem unter Druck stehenden sauerstoffhaltigen Gas zur Erzeugung des Sprühnebels vereinigt.

## Beschreibung

Die Erfmdung betrifft eine Misch- und Knetanordnung nach dem Oberbegriff des Anspruchs 1.

Eine derartige Anordnung ist bekannt aus der DE 200 05 533 U1. Hinsichtlich der Teigbildung und Teigentwicklung hat die dort beschriebene Anordnung noch Verbesserungsbedarf.

Es ist daher eine Aufgabe der vorliegenden Erfindung, eine Misch- und Knetanordnung der eingangs genannten Art derart weiterzubilden, dass die Teigbildung und Teigentwicklung in der Misch- und Knetanordnung verbessert ist.

Diese Aufgabe ist erfindungsgemäß gelöst durch eine Knetanordnung mit den im Kennzeichnungsteil des Anspruchs 1 angegebenen Merkmalen.

Erfindungsgemäß wurde zunächst erkannt, dass es für die Teigbildung und Teigentwicklung in der Misch- und Knetanordnung von entscheidender Bedeutung ist, kontrollierte Oxidationsverhältnisse während des Mischens und Knetens bereitzustellen. Dies ist bei den bekannten Misch- und Knetanordnungen im Wesentlichen dem Zufall überlassen. Durch die erfindungsgemäße Sprüheinrichtung ist es möglich, einen Sprühnebel mit steuerbarem Sauerstoffgehalt zu erzeugen. Der Sauerstoffgehalt kann hierbei über die Auswahl des sauerstoffhaltigen Gases bzw. über den Druck, mit dem das Gas dem Sprühkopf zugeführt wird, eingestellt werden. Es resultiert eine Misch- und Knetanordnung, mit der eine ausreichende Benetzung der im Knetbottich enthaltenen Teigkomponenten erfolgt. Durch den über den Sauerstoffgehalt gut steuerbaren oxidativen Prozess bei der Zufuhr der flüssigen oder verflüssigten Teigkomponenten wird eine verbesserte Teigbildung realisiert. Die mechanische Energie, die über das mindestens eine Knetwerkzeug eingetragen wird, führt in der Folge zu einer verbesserten Teigentwicklung.

Eine Sprüheinrichtung nach Anspruch 2 erhöht die Flexibilität bei der Vorgabe eines jeweils an die Misch- und Knetverhältnisse angepassten Sprühnebels. Mit Hilfe der Gasquellen können Gase mit verschiedenem Sauerstoffgehalt und ggf. mit verschiedenen Gehalt an anderen Reaktionskomponenten bereitgestellt werden.

Eine Sprüheinrichtung nach Anspruch 3 erlaubt eine Steuerung der Zusammensetzung des Sprühnebels zusätzlich über die Dosierung einzelner, der Sprühdüse zugeführter Komponenten.

Eine Sprüheinrichtung nach Anspruch 4 ist nochmals in den Möglichkeiten ihrer Einstellbarkeit verbessert. Der Sauerstoffgehalt kann zusätzlich über die Dosierung der einzelnen zugegebenen Gase vorgegeben werden.

Ein sauerstoffhaltiges Gas nach Anspruch 5 hat sich in Versuchen als zur Erzielung eines guten backtechnischen Ergebnisses besonders vorteilhaft herausgestellt.

Eine Temperiereinheit nach Anspruch 6 führt zu einer weiteren Einstellmöglichkeit des erzeugten Sprühnebels. Über die vorgegebene Temperatur der über die Sprühdüsen zugegebenen Komponenten lässt sich zudem die Teigtemperatur beeinflussen, wodurch das Ergebnis des Misch- und Knetprozesses zusätzlich verbessert werden kann.

Eine Sauerstoff-Messsonde nach Anspruch 7 optimiert die Möglichkeiten zur Einstellung des Sauerstoffgehaltes des Sprühnebels.

Ein Ausflihrungsbeispiel der Erfindung wird nachfolgend anhand der Zeichnung näher erläutert. In dieser zeigen:
- Fig. 1: schematisch einen Teil-Querschnitt durch eine Misch- und Knetanordnung mit einer Sprüheinrichtung; und
- Fig. 2: schematisch eine Draufsicht auf die Misch- und Knetanordnung, wobei mit Ausnahme eines ausgehend von Sprühöffnungen erzeugten Sprühnebels die Komponenten der Sprüheinrichtung weggelassen sind.

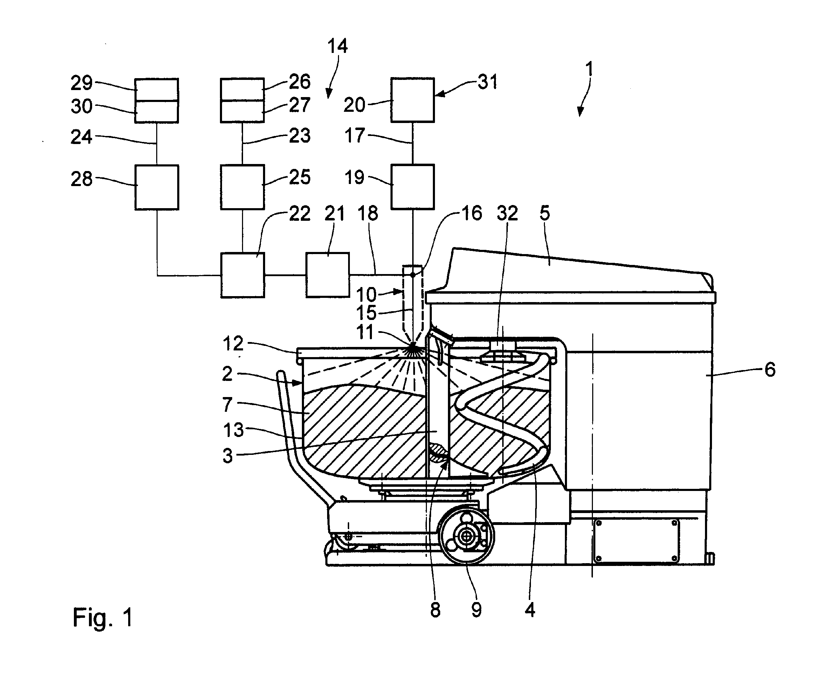

Eine in Figur 1 insgesamt mit 1 bezeichnete Misch- und Knetanordnung für Teig hat einen Knetbottich 2, in dem als Knetwerkzeuge ein Knet- und Leitstab 3 und eine Knetspirale 4 angeordnet sind. Die Knetwerkzeuge 3, 4 sind mit einem Kopfteil 5 einer Steuer- und Antriebseinheit 6 der Misch- und Knetanordnung 1 verbunden. Mittels der Steuer- und Antriebseinheit 6 kann das Kopfteil 5 so weit nach oben gefahren werden, bis die mit dem Kopfteil 5 verbundenen Knetwerkzeuge 3 und 4 aus dem Knetbottich 2 herausgefahren sind.

Die Temperatur von Teig bzw. Teigkomponenten 7 kann mit einem Temperaturfühler 8 vom Typ PT 100 gemessen werden, der in einem bodenseitigen Abschnitt des Knet- und Leitstabs 3 angeordnet ist. Mit Hilfe einer nicht näher dargestellten Temperiereinrichtung ist mit Hilfe der Messwerte des Temperaturfühlers 8 und auf dieser Datengrundlage geregelt durch eine zentrale Recheneinheit der Steuer- und Antriebseinheit 6 eine automatische Anpassung der Temperatur des Teigs 7 im Knetbottich 2 an einen Vorgabewert möglich.

Der Knetbottich 2 ist um seine vertikale Symmetrieachse drehbar gelagert. Zur Drehung des Knetbottichs 2 während des Knetvorgangs weist die Misch- und Knetanordnung 1 einen Antriebsmotor 9 auf.

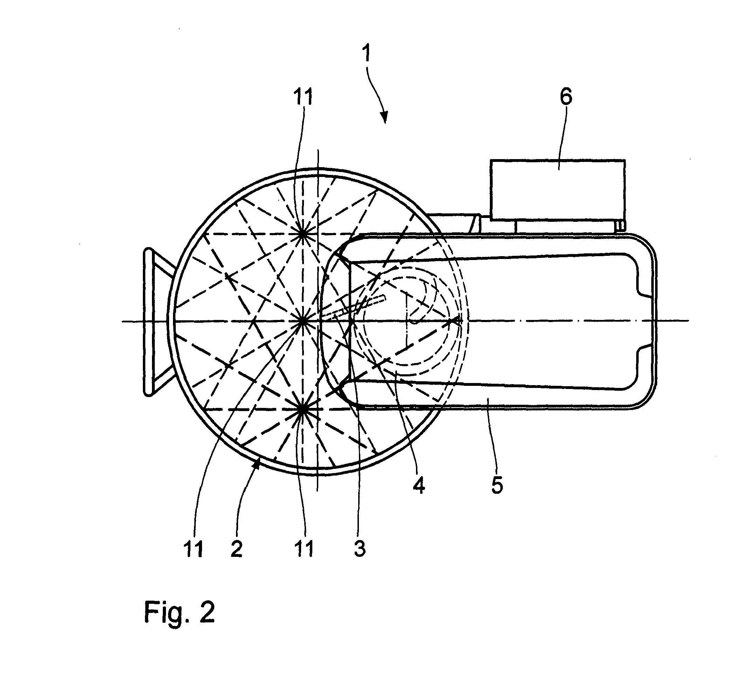

Zur Erzeugung eines Sprühnebel im Knetbottich 2 dient eine Mehrzahl von Sprühdüsen 10, von denen in Figur 1 eine Sprühdüse 10 mit gestricheltem Sprühkopf dargestellt ist. Die Position von bottichseitigen Sprühöffnungen 11 der bei der dargestellten Ausführung insgesamt drei Sprühdüsen 10 ist in Figur 2 dargestellt. Im Bereich der Sprühöffnungen 11 sind die Sprühdüsen 10 an einem Deckel 12 des Knetbottichs 2 montiert. Der Deckel 12, der sich beim Drehen des Knetbottichs 2 nicht mitdreht, verschließt den Knetbottich 2 nach oben hin, sodass dort weder Teig 7 noch Teigkomponenten austreten können. Die Sprühöffnungen 11 liegen also allesamt oberhalb des vom Knetbottich 2 begrenzten Volumens. Eine der Sprühöffnungen 11 liegt in etwa auf der Drehachse des Knetbottichs 2. Die beiden anderen Sprühöffnungen 11 liegen spiegelsymmetrisch in Figur 2 ober- und unterhalb der mittleren, auf der Drehachse liegenden Sprühöffnung 11. Der Abstand dieser beiden weiteren Sprühöffnungen 11 zu einer Mantelwand 13 des Knetbottichs 2 ist in etwa so groß wie der Abstand dieser beiden Sprühöffnungen 11 zur zentralen Sprühöffnung 11.

Nachfolgend wird eine der insgesamt drei Sprüheinrichtungen 14, die jeweils zu den Sprühdüsen 10 gehören, am Beispiel der in Figur 1 dargestellten Sprüheinrichtung 14 beschrieben. Die Sprühöffnung 11 stellt das Ende einer Mischleitung 15 dar, die in der Sprühdüse 10 verläuft. Am der Sprühöffnung 11 gegenüberliegenden Endabschnitt der Sprühdüse 10 ist eine Einmündung 16 angeordnet, in der sich eine Komponenten-Zuführleitung 17 mit einer Gas-Mischleitung 18 verbindet.

Die Komponenten-Zuführleitung 17 dient zum Zuführen von flüssigen oder verflüssigten Teigkomponenten zu der Sprühdüse 10. Stromaufwärts der Einmündung 16 ist in der Komponenten-Zuführleitung 17 eine Temperiereinheit 19 zur Vorgabe der Temperatur der flüssigen oder verflüssigten Teigkomponenten angeordnet. Stromaufwärts der Temperiereinheit 19 ist ein Vorratsbehälter 20 für die flüssigen oder verflüssigten Teigkomponenten angeordnet. Bei den flüssigen oder verflüssigten Teigkomponenten handelt es sich z. B. um Wasser, Salz, Hefe und gegebenenfalls Oxidationskomponenten

Stromaufwärts der Einmündung 16 ist in der Gas-Mischleitung 18 eine Temperiereinheit 21 zur Vorgabe der Temperatur des in der Gas-Mischleitung 18 geförderten Gases vor der Sprühdüse 10 angeordnet. Stromaufwärts der Temperiereinheit 21 ist in der Gas-Mischleitung 18 eine Mischeinheit 22 angeordnet. Dort vereinigen sich eine erste Gas-Zuführleitung 23 und eine zweite Gas-Zuführleitung 24 zur Gas-Mischleitung 18.

Stromaufwärts der Mischeinheit 22 ist in der ersten Gas-Zuführleitung 23 eine erste Dosiereinheit 25 angeordnet. Stromaufwärts der ersten Dosiereinheit 25 ist eine erste Gasquelle 26 mit zugeordneter erster Druckeinheit 27 angeordnet. Stromaufwärts der Mischeinheit 22 ist in der zweiten Gas-Zufiihrleitung 24 eine zweite Dosiereinheit 28 angeordnet. Stromaufwärts der zweiten Dosiereinheit 28 ist eine zweite Gasquelle 29 mit zugeordneter zweiter Druckeinheit 30 angeordnet.

Die aus den Gasquellen 26, 29 zur Verfügung gestellten Gase sind sauerstoffhaltig. Hierbei kann es sich um reinen Sauerstoff, um Luft oder um ein Stickstoff/Sauerstoff-Gemisch handeln.

Die Komponenten-Zuführleitung 17 bildet mit der Temperiereinheit 19 und dem Vorratsbehälter 20 eine Zuführeinrichtung 31 zum Zuführen der flüssigen oder verflüssigten Teigkomponenten zu der Sprühdüse 10. Für die verschiedenen Sprühdüsen 10 müssen nicht notwendigerweise jeweils separate Gasquellen 26, 29 oder eine separate Zuführeinrichtung 31 vorgesehen sein. Vielmehr ist es möglich, dass je nach Anordnung an die Flexibilität bei der Einstellung der Sprühnebel in den einzelnen Sprühdüsen 10 eine Verzweigung der Zuführleitungen 17, 23, 24 bzw. die Mischleitung 18 hin zu den Einmündungen 16 der verschiedenen Sprühdüsen 10 stattfindet. Sowohl die Sprüheinrichtungen 14 als auch die Zuführeinrichtung 31 stehen mit der zentralen Recheneinheit der Steuer- und Antriebseinheit 6 in Signalverbindung, sodass eine Steuerung bzw. Regelung der einzelnen Komponenten der Einrichtungen 14, 31 möglich ist.

Die Misch- und Knetanordnung 1 arbeitet folgendermaßen: Dem Knetbottich 2 wird neben den flüssigen oder verflüssigten Teigkomponenten noch Mehl und gegebenenfalls weitere nicht flüssige und nicht verflüssigte Komponenten zur Erzeugung des Teigs 7 zugegeben. Die Zugabe nicht flüssiger und nicht verflüssigter Komponenten erfolgt durch einen Zuführstutzen 32 oberhalb der Knetspirale 4. Die Zugabe der flüssigen oder verflüssigten Teigkomponenten erfolgt hierbei über die Sprühdüsen 10. In diesen wird den flüssigen oder verflüssigten Teigkomponenten eine unter Druck stehende Mischung der sauerstoffhaltigen Gase aus den Gasquellen 26, 29 zugeführt. Der im Knetbottich 2 dadurch entstehende Sprühnebel ist daher in seinem Sauerstoffgehalt gut steuerbar. Diese Steuerung des Sauerstoffgehalts erfolgt über das Mischverhältnis der Gase aus den Gasquellen 26, 29, das über die Dosiereinheiten 25, 28 und über die Mischeinheit 22 eingestellt werden kann. Das Mischverhältnis kann weiterhin auch über eine Einzeltemperierung der Gase aus den Gasquellen 26, 29 durch in den Zuführleitungen 23, 24 angeordnete und nicht dargestellten weiteren Temperiereinheiten erfolgen. Aufgrund der somit steuerbaren Sauerstoffzufuhr über den Sprühnebel kommt es zu einer ausreichenden Benetzung insbesondere der singulären Partikel der nicht flüssigen Teigkomponenten, insbesondere des Mehls. Während des Knetprozesses liegt daher eine ausreichend aerobe Situation im Teig 7 vor. Durch in ihrem Ausmaß aufgrund des steuerbaren Sauerstoffgehalts beeinflussbare oxidative Prozesse wird die Bildung des Teigs 7 verbessert. Beispielsweise kann das Redoxpaar Sauerstoff und L-Ascorbinsäure, dem wichtigsten Mehlbehandlungsmittel, in der Misch- und Knetanordnung 1 direkt zur Reaktion gebracht werden, was die Teigentwicklung verbessert und beschleunigt. Diese oxidativen Prozesse verbessern bzw. beschleunigen die Teigentwicklung im Knetbottich 2 innerhalb der Knetzone, in der die Knetwerkzeuge 3, 4 auf den Teig 7 einwirken, und innerhalb der restlichen Ruhezone des Knetbottichs 2. Dabei oxidieren insbesondere im Teig enthaltene Proteine, was das erwünschte Verkleben des Teigs fördert.

Die Anordnung der Sprühdüsen 10 im Deckel 12 gewährleistet eine gleichverteilte Benetzung des Teigs bzw. der Teigkomponenten 7. Durch die Druckeinheiten 27, 30 und über entsprechende Einstellmöglichkeiten der Sprühdüsen 10 ist die Form und Stärke der Besprühung durch den Sprühnebel variabel einstellbar. Die Temperatur des Sprühnebels kann zudem über die Temperiereinheiten 19, 21 eingestellt werden. Über die Temperiereinheiten 19, 21 ist zudem eine Feineinstellung des Sauerstoffgehalts des Sprühnebels möglich. Bei einer Variante der Misch- und Knetanordnung 1 kann der Sauerstoffgehalt auf Basis der Messwerte einer nicht dargestellten Sauerstoff-Messsonde, die z. B. in der Gas-Mischleitung 18 benachbart zur Temperiereinheit 21 angeordnet sein kann, geregelt werden. Der Sauerstoffsensor steht mit der zentralen Recheneinheit der Steuer- und Antriebseinheit 6 in Signalverbindung, sodass eine automatische Anpassung des Sauerstoffgehalts des Sprühmediums an einem Vorgabewert möglich ist. Die beschriebenen Anpassungsmöglichkeiten der Misch- und Knetanordnung 1 gewährleisten die Herstellung unterschiedlicher Teige 7. Dabei kann insbesondere eine Anpassung an die jeweilige Teigzusammensetzung erfolgen. Der so mit Hilfe der Misch- und Knetanordnung 1 hergestellte und bearbeitete Teig kann dann zu Teiglingen weiterverarbeitet werden. Insbesondere können vorgegärte und gefrostete Teiglinge aus dem mit der Misch- und Knetanordnung 1 bearbeiteten Teig ohne Qualitätseinbusen erzeugt werden.

Zudem wird eine während der Mischphase auftretende Mehlstaubbildung durch den Sprühnebel unterdrückt.

Insgesamt wird die Qualität des mittels der Misch- und Knetanordnung 1 hergestellten und bearbeiteten Teigs 7 in Abhängigkeit des Sauerstoffgehalts, der Drehzahl der Knetspirale 4 sowie der mit Hilfe des Temperaturfühlers 8 geregelten Temperatur des Teiges 7 gesteuert.

## Patentansprüche

1. Misch- und Knetanordnung (1)
- mit einem Knetbottich (2),
- mit mindestens einem Knetwerkzeug (3, 4),
- mit einer Sprüheinrichtung (14),
- - mit mindestens einer Sprühdüse (10) zur Erzeugung eines Sprühnebels im Knetbottich (2) und
- - mit einer Zuführeinrichtung (31) zum Zuführen von flüssigen oder verflüssigten Teigkomponenten zu der Sprühdüse (10),
**dadurch gekennzeichnet, dass** die Sprüheinrichtung (14) aufweist:
- eine Quelle (26, 29) für ein sauerstoffhaltiges Gas,
- eine Druckeinheit (27, 30), die das sauerstoffhaltige Gas unter Druck setzt,
- wobei die Sprühdüse (10) einen Sprühkopf aufweist, in dem die flüssigen oder verflüssigten Teigkomponenten mit dem unter Druck stehenden sauerstoffhaltigen Gas zur Erzeugung des Sprühnebels vereinigt werden.

2. Misch- und Knetanordnung nach Anspruch 1, **dadurch gekennzeichnet, dass** die Sprüheinrichtung (14) aufweist:
- Mehrere Gasquellen (26, 29) mit zugeordneten Druckeinheiten (27, 30),
- mindestens eine Mischeinheit (22) zum kontrollierten Mischen der Gase.

3. Misch- und Knetanordnung nach Anspruch 1 oder 2, **dadurch gekennzeichnet, dass** die Sprüheinrichtung (14) mindestens eine Dosiereinheit (25, 28) zur dosierten Zugabe der flüssigen oder verflüssigten Teigkomponenten und/oder des mindestens einen Gases aufweist.

4. Misch- und Knetanordnung nach Anspruch 3, **dadurch gekennzeichnet, dass** jeder Gasquelle (26, 29) eine Dosiereinheit (25, 28) zugeordnet ist.

5. Misch- und Knetanordnung nach einem der Ansprüche 1 bis 4, **dadurch gekennzeichnet, dass** als sauerstoffhaltiges Gas mindestens eines der folgenden Gase eingesetzt wird: Sauerstoff, Luft, Stickstoff/Sauerstoff-Gemisch.

6. Misch- und Knetanordnung nach einem der Ansprüche 1 bis 5, **gekennzeichnet durch** eine Temperiereinheit (19, 21) zur Vorgabe der Temperatur der flüssigen und verflüssigten Teigkomponenten und/oder des mindestens einen Gases vor dem Sprühkopf (10).

7. Misch- und Knetanordnung nach einem der Ansprüche 1 bis 6, **gekennzeichnet durch** eine Sauerstoff-Messsonde zur Vorgabe des Sauerstoffgehaltes des mindestens einen Gases vor dem Sprühkopf (10).
